(19) Europäisches Patentamt / European Patent Office / Office européen des brevets

(11) **EP 2 889 354 B1**

(12) **EUROPEAN PATENT SPECIFICATION**

(45) Date of publication and mention
of the grant of the patent:
**11.08.2021  Bulletin 2021/32**

(51) Int Cl.:
***G01N 25/00*** *(2006.01)*      ***F24S 80/20*** *(2018.01)*
***F24S 40/90*** *(2018.01)*

(21) Application number: **14200548.7**

(22) Date of filing: **30.12.2014**

(54) **Method and system for testing and evaluating heat transfer elements at high temperature operations**

Verfahren und System zum Testen und zur Auswertung von Wärmeübertragungselementen beim Betrieb mit hohen Temperaturen

Procédé et système permettant de tester et d'évaluer des éléments de transfert de chaleur en fonctionnement à haute température

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2013  IN 4122MU2013**

(43) Date of publication of application:
**01.07.2015  Bulletin 2015/27**

(73) Proprietor: **INDIAN OIL CORPORATION Ltd.
Mumbai 400051 (IN)**

(72) Inventors:
  • **Tiwari, Vinay**
    **121 007 Haryana (IN)**
  • **Srivastva, Umish**
    **121 007 Haryana (IN)**
  • **Sharma, Alok**
    **121 007 Haryana (IN)**
  • **Gupta, Anurag Ateet**
    **121 007 Haryana (IN)**
  • **Sarangi, Satish Kumar**
    **121 007 Haryana (IN)**
  • **Malhotra, Ravinder Kumar**
    **121 007 Haryana (IN)**

(74) Representative: **Høiberg P/S
Adelgade 12
1304 Copenhagen K (DK)**

(56) References cited:
**US-A1- 2006 138 383     US-A1- 2009 154 520
US-B1- 7 588 694**

  • **T. RUEGAMER ET AL: "Molten Salt for Parabolic Trough Applications: System Simulation and Scale Effects", ENERGY PROCEDIA, vol. 49, September 2013 (2013-09), pages 1523-1532, XP055189827, ISSN: 1876-6102, DOI: 10.1016/j.egypro.2014.03.161**
  • **None**

## Description

## FIELD OF THE INVENTION:

The present invention relates to heat transfer elements used in solar energy based thermal power plants and solar heat storage applications, and in particular to a test set-up and method for performance evaluation of such elements.

## BACKGROUND OF THE INVENTION:

With the continuous depletion of the non-renewable energy sources such as coal, petroleum etc. the alternate energy sources are being looked upon for various applications. One of such important and unlimited source is solar energy which has attracted most research attention in recent years. Several systems e.g. Concentrated Solar Power, have been devised to harvest and store solar energy.

In Concentrated Solar Power (CSP), a number of sun-tracking concentrators focus sunlight on a receiver. The receiver contains a heat transfer fluid which gets heated up. The energy harvested is either used to generate steam or is stored as thermal energy for later use in steam generation. The steam eventually generated is used in a conventional turbine-generator to produce electricity.

In most of the CSP plant installed worldwide HTFs used are generally oil based or molten salts. Main problem with oil based HTF is decomposition of hydrocarbon above 400°C, which limits the operating temperature of solar collector (parabolic trough). Moreover, the availability of oil based HTF up to 400°C is also limited. Molten salts such as mixture of nitrate salts ($NaNO_3$ and $KNO_3$) can be utilized for high temperature operation, mainly in solar towers upto 560°C. However, handling of molten salts is very challenging and risky, especially in parabolic trough based CSP system as the salt freezes at temperature below 230°C.

Since CSP installations are meant for operation at substantially higher temperatures so as to improve the economics in comparison with other alternative technologies, several parabolic trough industries are exploring alternate HTFs which would allow operation at much higher temperatures. Examples of HTFs currently under investigation include molten salts, water for direct-steam generation, organic silicones, ionic liquids, and polyaromatic napthalenes. In addition, researchers have been also considering the incorporation of nanoparticles into such fluids to improve their heat capacity, heat-transfer rate, and/or thermal stability at high temperatures.

Accordingly, the need of the hour is to have a mechanism for comprehensively testing and evaluating HTF under high temperature conditions.

Another need of the hour is to test and evaluate other types of heat transfer elements, such as a heat exchanger, under said conditions.

In general, the use of a heat exchanger and a secondary fluid for determining a thermo-physical parameter of a fluid under test is known, for example from US 2009/154520 A1.

## OBJECT OF THE INVENTION:

It is another object of the present invention to test and evaluate heat transfer elements e.g. a heat transfer fluid (HTF) at high temperature operations.

It is another object of the present invention to perform a durability testing of the HTF at high temperatures, using aforesaid simulation.

In an embodiment of the present invention, it is envisaged to evaluate another heat transfer element i.e. the heat exchanger element under high temperature conditions through aforesaid simulation.

## SUMMARY OF THE INVENTION:

In an embodiment of the present invention, a method for testing and evaluating heat transfer elements at high temperature operations has been described. The method starts with introduction of a heat transfer fluid (HTF) and a secondary fluid into at least one heat exchanger. At least one thermodynamic parameter related to heat transfer between the HTF and the secondary fluid is measured. Thereafter, at least one thermo-physical parameter of said HTF is determined based on the measured thermodynamic parameter related to the secondary fluid. Thereafter, the heat transfer fluid is graded or rated based on the at least one thermo-physical parameter of said HTF. Finally, at least one stability related parameter for the heat transfer fluid is determined, wherein at least one stability related parameter indicates at least a rate of degradation in performance of the heat transfer fluid over a pre-determined time period.

In another embodiment of the present invention, the present invention describes system for testing and evaluating heat transfer elements at high temperature operations. Within the system, an introducing means introduces a heat transfer fluid (HTF) and a secondary fluid towards a heat exchanger for heat transfer between the HTF and the secondary fluid. A measuring means measures at least one thermodynamic parameter related to the heat transfer between the HTF and the secondary fluid. A processing determines at least one thermo-physical parameter of said HTF based at least upon at least one measured thermodynamic parameter related to the secondary fluid. Thereafter, a grading means grades or rates the HTF based upon the determined thermo-physical parameter of said heat transfer fluid. Finally, at least one stability related parameter for the heat transfer fluid is determined, wherein at least one stability related parameter indicates at least a rate of degradation in performance of the heat transfer fluid over a pre-determined time period.

To further clarify advantages and features of the present invention, a more particular description of the invention will be rendered by reference to specific embodiments thereof, which is illustrated in the appended drawings. It is appreciated that these drawings depict only typical embodiments of the invention and are therefore not to be considered limiting of its scope. The invention will be described and explained with additional specificity and detail with the accompanying drawings.

**Brief Description of Figures:**

These and other features, aspects, and advantages of the present invention will become better understood when the following detailed description is read with reference to the accompanying drawings in which like characters represent like parts throughout the drawings, wherein:

Figure 1 shows a flow chart corresponding to an embodiment of the invention;
Figure 2 shows some aspects of the internal construction of an apparatus in accordance with an embodiment of the present invention; and
Figure 3 shows an exemplary implementation of the invention through a control flow diagram, in accordance with a first embodiment of the present invention.

Further, skilled artisans will appreciate that elements in the drawings are illustrated for simplicity and may not have been necessarily been drawn to scale. For example, the flow charts illustrate the method in terms of the most prominent steps involved to help to improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having benefit of the description herein.

**Detailed Description:**

For the purpose of promoting an understanding of the principles of the invention, reference will now be made to the embodiment illustrated in the drawings and specific language will be used to describe the same.
It will be understood by those skilled in the art that the foregoing general description and the following detailed description are exemplary and explanatory of the invention and are not intended to be restrictive thereof.
Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.
The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.
Unless otherwise defined, all technical and scientific terms used herein have the same meaning as commonly understood by one of ordinary skill in the art to which this invention belongs. The system, methods, and examples provided herein are illustrative only and not intended to be limiting.
Embodiments of the present invention will be described below in detail with reference to the accompanying drawings.
Heat transfer fluid in any solar energy based CSP power plant is a major contributor power generation. Prior to employment of any developed HTF in CSP power plants, the HTF requires a detailed evaluation of its properties including thermo physical properties, cyclic durability, and performance testing of HTF etc. Thermo-physical Properties or the performance indicator of HTF includes its boiling point, melting point, vapor pressure in operating range, thermal conductivity, viscosity, density and heat capacity. These properties define a range of parameters and conditions under which a particular HTF is able to transport heat effectively in the solar CSP power plant.
Properties such as viscosity and density are indicator of the HTF pump ability. Heat capacity and thermal conductivity are indicators of HTF heat retention capacity and ability to release heat in the collector (or downstream heat exchangers), respectively. A thermal stability of HTF is also a very important parameter for such high temperature applications. The afore-recited thermo-physical properties like viscosity, thermal conductivity, density and heat capacity are the basic material properties which are conventionally evaluated by relying on different analytical tests based upon Differential Scanning Calorimeter (DSC), Laser Flash System, Rheometer, etc. These tests are generally performed at room temperature or slightly above room temperatures, on small quantity of samples.
Yet, the aforesaid thermo-physical properties vary as a function of temperature conditions. Therefore, performance of such heat transfer fluids in the real systems not only depends on the material properties but also upon dynamic operating conditions and the heat exchanger geometries. Also, a cyclic testing/durability testing of HTF is performed under laboratory conditions over small quantity of fluid, which fails to provide a realistic estimate. In addition, most HTF used at 400°C operating conditions are two-phase systems, that turn into a gaseous phase upon reaching the temperatures of about 250-270°C. Under such extreme conditions, measuring the thermo-physical properties under standard laboratory equipments becomes further substantially difficult.

Accordingly, with the ever-burgeoning variety of heat transfer fluids, improved testing and evaluation methods are the need of the hour to investigate a combined influence of the aforesaid thermo-physical properties on the heat transfer characteristics of HTF with regard to its overall performance, compatibility with the system, etc., in a more realistic way at higher operating temperatures (400°C or more) & under dynamic operating conditions.

To solve the aforesaid problems, the present invention discloses a method and a test set-up (apparatus) incorporating said method for an improved testing and evaluation of thermo-physical properties and heat transfer characteristics of Heat Transfer Fluids (HTFs). Such testing and evaluation is performed based on simulation of operation conditions as prevalent in CSP Plants, solar thermal energy storage devices or any other solar energy based thermal power plants.

Further, present invention may also be used for cyclic testing of the HTF as well as evaluation of different heat exchangers employed within the CSP plants and other analogous solar energy based thermal power plants.

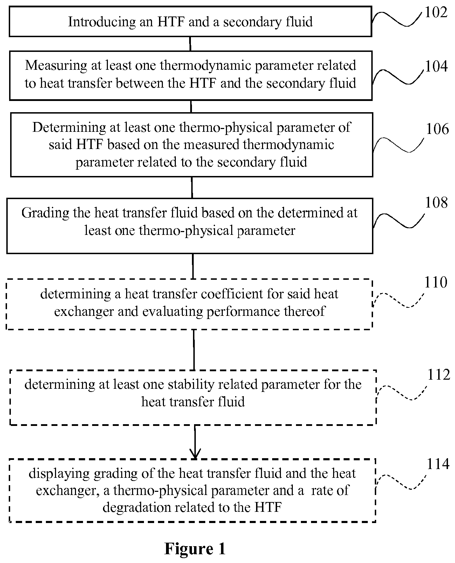

Now referring to figure 1, it can be seen that the present invention describes a method for testing and evaluating heat transfer elements at high temperature operations, the method comprising:

> introducing (step 102) a heat transfer fluid (HTF) and a secondary fluid into at least one heat exchanger;
> measuring (step 104) at least one thermodynamic parameter related to heat transfer between the HTF and the secondary fluid;
> determining (step 106) at least one thermo-physical parameter of said HTF based on at least one measured thermodynamic parameter related to the secondary fluid;
> grading (step 108) the heat transfer fluid based on the at least one thermo-physical parameter of said HTF; and
> determining (step 112) at least one stability related parameter for the heat transfer fluid, wherein at least one stability related parameter indicates at least a rate of degradation in performance of the heat transfer fluid over a pre-determined time period.

In another embodiment of the invention, said at least-one thermo-physical parameter of said HTF is determined based further upon a known thermodynamic parameter of the secondary fluid.

In still another embodiment, the HTF and the secondary fluid are at least one of: a single phase aqueous fluid, a two phase (vapour/liquid) fluid, a gaseous fluid, an aqueous fluid with additives, and an aqueous fluid with suspended particles.

In a further embodiment of the invention, at least one measured thermodynamic parameter is based upon at least one of a temperature, density, and a pressure of the secondary fluid at the outlet of the heat exchanger.

In yet another embodiment, at least one determined thermo-physical parameter corresponds to a thermo-physical property of the HTF and wherein said property corresponds to one or more of a viscosity, thermal conductivity, density and heat capacity.

In another embodiment, the measuring comprises measuring the at least one thermodynamic parameter related to said HTF.

In yet another embodiment, the introducing comprises providing said HTF and said secondary fluid at a pre-determined temperature, pressure and a flow rate into said at least one heat exchanger.

In a further more embodiment of the invention, the invention further comprises determining (step 110) a heat transfer coefficient for said at least one heat exchanger; and evaluating performance of said at least one heat exchanger based at least on said heat transfer coefficient.

In another embodiment, said heat transfer coefficient is determined based upon at least one of: a temperature and pressure difference between an inlet and outlet of said heat exchanger, and at least one measured thermo-dynamic parameter associated with the HTF and/or the secondary fluid.

In another embodiment, the invention further comprises displaying (step 114) at least one of: grading of the heat transfer fluid, a performance indicia of the heat exchanger; at least one determined thermo-physical parameter related to the HTF at a temperature of at least about 200° C, and said rate of degradation in performance of the HTF.

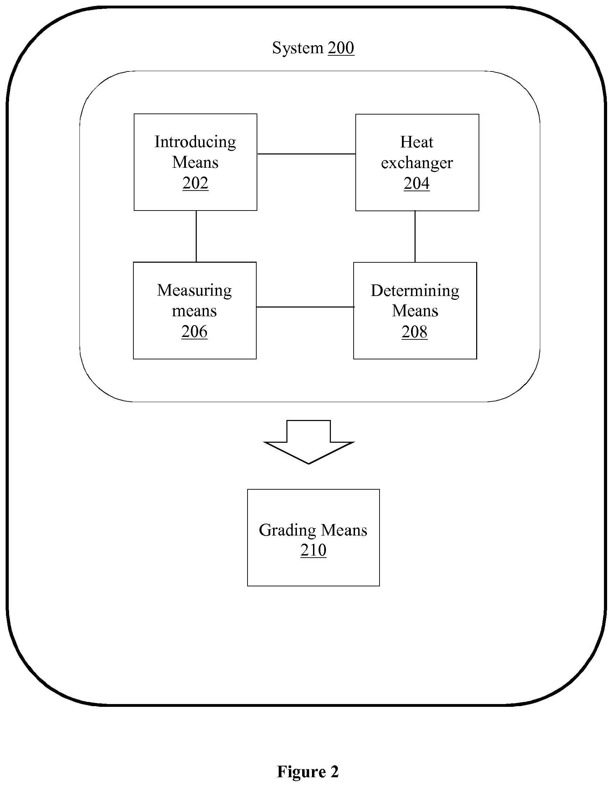

Referring to figure 2, the present invention also provides a system (200) for testing and evaluating heat transfer elements at high temperature operations, the system comprising:

> an introducing means (202) for introducing a heat transfer fluid (HTF) and a secondary fluid;
> at least one heat exchanger (204) for heat transfer between the HTF and the secondary fluid;
> a measuring means (206) to measure at least one thermodynamic parameter related to the heat transfer between the HTF and the secondary fluid;
> a processing means (208) to determine at least one thermo-physical parameter of said HTF based at least upon at least one measured thermodynamic parameter related to the secondary fluid; and

a grading means (210) to grade the HTF based upon the determined at least one thermo-physical parameter of said heat transfer fluid.

Not shown in figure 2 are the thermal stability determining means for determining at least one stability related parameter for the heat transfer fluid,wherein at least one stability related parameter indicates at least a rate of degradation in performance of the heat transfer fluid over a pre-determined time period.

In another embodiment of the invention, the processing means determines said at least one thermo-physical parameter related to said HTF based further upon a known thermodynamic parameter of the secondary fluid.

In still another embodiment, the measuring means measure the at least one thermodynamic parameter related to the secondary fluid based at least upon a temperature, density and pressure of the secondary fluid at the outlet of the heat exchanger.

In a further embodiment of the invention, the measuring means measure at least one thermodynamic parameter related to said HTF.

In yet another embodiment, the introducing means comprises a heater, pump and flow meter for providing said HTF and said secondary fluid at a pre-determined temperature, pressure and flow rate into said at least one heat exchanger.

In another embodiment, the invention further comprises a determining means for determining a heat transfer coefficient of at least one heat exchanger, and an evaluating means for evaluating a performance indicator of said at least one heat exchanger.

In yet another embodiment, said determining means determines said heat coefficient based upon at least one of: a temperature and pressure difference between the inlet and outlet of said heat exchanger, and at least one measured thermo-dynamic parameter associated with the HTF and secondary fluid.

In another embodiment, the invention further comprises a display for displaying at least one of: grading of the heat transfer fluid, at least one determined thermo-physical parameter related to the HTF at a temperature of at least about 200° C, a performance indicia of the heat exchanger and said rate of degradation in performance of the heat transfer fluid.

In the following paragraphs a detailed description about implementation of the aforesaid method and device and exemplary manifestations of the results flowing out of the present invention are provided. It should however, be understood every implementation of the method and device and every manifestation of the invention results need not follow the scenario as mentioned in the following paragraphs.

**EXEMPLARY IMPLEMENTATION OF THE PRESENT INVENTION:**

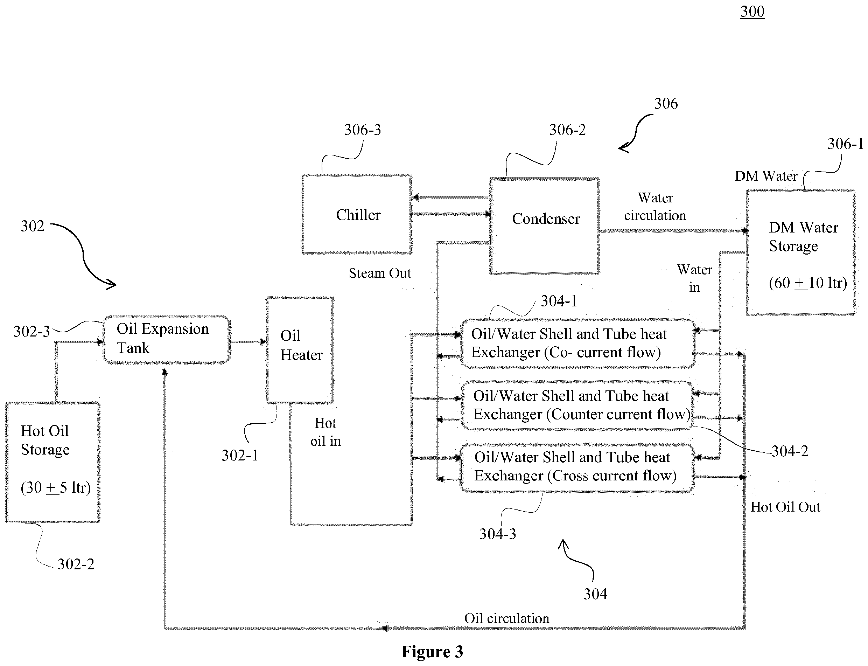

Referring to Fig. 3, a control flow diagram depicting the process flow (Fig. 1) as implemented within the apparatus 200 has been shown. As shown in the figure, the control flow depicts a flow of operation within an exemplary set-up 300 that is meant for evaluation of thermal behavior and heat transfer characteristics of heat transfer elements like Heat Transfer Fluids and heat exchangers (HTFs) for their potential applications in concentrated solar power based plants or other solar energy powered plants.

The test set-up 300 disclosed in the present invention mainly comprises a hot oil unit 302, a heat exchanger 304 and a secondary fluid circulation system 306. Both the hot oil unit 302 and the secondary fluid circulation system 306 collectively represent the introducing means 202 of Fig. 2, whereas the heat exchanger 204 refers to the heat exchanger 304.

The hot oil unit 302 is composed of an oil heater 302-1, an oil circulating pump (not shown in the figure), and a hot oil storage system 302-2 with an expansion tank (302-3) of suitable capacity, valves and safety. The hot oil storage system 302-2 may be provided with a flame arrester for safety reasons.

The HTF, to be used in the set up as a heat transfer media, is extracted from the hot oil storage system 302-3 and heated at a high temperature at 400°C or even above within the oil heater 302-1. Thereafter, the HTF from the oil heater 302-1 is flown through the heat exchangers 304 for heat exchange with the secondary liquid. The oil circulating pump (not shown in figure) as a component of the hot oil unit 302 facilitates transport of the HTF at a pre-determined flow rate towards the heat exchanger 304.

The heat exchanger 304 may be operated with the different flow configurations, e.g. countercurrent, co-current or cross flow, taken either alone or in combination. Such heat exchanger 304 utilized in the invention may be selected from a group comprising of but not limited to a shell and tube heat exchanger, finned/un-finned tubular heat exchanger, finned/un-finned plate heat exchanger, plate and shell heat exchanger and spiral heat exchanger. When more than one heat exchanger 304 is used, they may be connected in parallel or in series.

In addition, a secondary fluid circulation system 306 may be provided to circulate a secondary fluid (e.g. DM water or any other aqueous solution) from a storage tank 306-1 at a predetermined flow rate towards the heat exchanger 304. Within the heat exchanger 304, upon interacting with the HTF at high-temperature, the secondary fluid gets converted into steam. The temperature-pressure values (or any other thermodynamic parameter related to steam) of the generated steam are then measured and fed to a grading device 220 (e.g. a computing device) for further processing, like determination of grading/rating the HTF and the heat exchanger 304, as later elaborated in the description.

Further, the test set up 300 includes a condenser 306-2 as a part of secondary fluid circulation system 306. The condenser 306-2 directly receives the generated steam to condense the same into water. It may be understood that the thermal power plant at such stage otherwise sends the generated steam to a steam turbine for power generation and thereafter to the condenser 306-2. The steam gets converted into DM water within the condenser 306-2. The water circulation system further includes a chiller 306-3 for bringing down the temperature of the DM water as received from the condenser 306-2. The DM water is then recycled in controlled conditions and transported back to the storage tank 306-1. The HTF from the heat exchanger 304 is also recycled by passing through the oil expansion tank 302-3 and directing it back to the oil heater 302-1.

Further many other components like pumps, valves, etc. (not shown in Fig. 3 for simplicity) known to those skilled in the art may be employed within the test set up 300 to achieve and control the flow of the HTF and the secondary fluid as indicated in Fig. 3.

Depending upon the configuration of the implemented heat exchanger 304 (e.g. countercurrent flow, co-current flow, cross flow or other profiles), an overall value (a numerical figure) of the heat transferred from the HTF to the secondary fluid may be used to further determine heat transfer coefficient of the heat exchanger 304.

In an implementation of the present subject matter, the control flow within the test set up 300 may be executed, controlled and controlled through embedded systems, which may exhibit the following interactive features:

> 1. A display of general synoptic of the system indicating a current status of each main component, the values of measurement and the set point.
> 2. A user interface for allowing process visualization, and real time indication of value for critical parameters like flow for gas, liquid feed, reactor temperatures and pressures.
> 3. Change of alarm limits and enablement /disablement of the alarm.
> 4. Generation of the alarms and logging alarms according to set values.
> 5. Change of control loop parameters and status of digital output.
> 6. Historical and real time data variation pattern.
> 7. Historic data archiving facility

The test set up 300 has been designed as a stand-alone unit using modular technology. The different component centric modules (the hot oil unit 302, the heat exchanger 304, and the secondary fluid circulation unit 306) are arranged in a skid, in line with the control flow diagram depicted in Fig. 3, thereby allowing an ease of maintenance of the test set up 300.

In other implementation, the hot oil unit 302 coupled with a recirculation and expansion tank and the heat exchanger 304 coupled with the condenser 306-2 & the chiller 306-3 may also be used as standalone units. Hot oil unit 302 in such a manner may be used for thermal storage studies of the HTF.

## EXEMPLARY APPLICATIONS OF THE PRESENT INVENTION

The test set up can be used for a number of applications including but not limited to performance evaluation of HTF at high temperatures i.e. 200°C or above, evaluation of the thermal energy storage capacity of HTFs, evaluation of the heat exchanger 304, degradation studies of HTF, thermal cycling tests of HTF, etc.

Accordingly, few exemplary applications as flowing out of the invention have been outlined as follows. However, following applications merely denote exemplary applications flowing out of the present invention, which may be extended to cover other similar analogous applications.

*Performance evaluation ofHTF*

For performance evaluation of HTF, the temperature, pressure and density of the generated steam at the outlet of the heat exchanger 304 are measured as thermodynamic parameters representing a heat transfer between the HTF and the secondary fluid and the quality of steam. In other implementation, known values of various other types of known thermodynamic parameters may be derived (for example: deriving through look up tables) based upon the measured thermodynamic parameters temperature and pressure associated with the steam at the outlet of the heat exchanger 304. Overall, all measured or known thermodynamic parameters associated with the steam denote an overall quality of the steam

Further, at least one parameter representing a thermo-physical property of the HTF is determined or evaluated based upon the measured or known thermodynamic parameters. Examples of the thermo-physical properties include viscosity, thermal conductivity, density and heat capacity as associated with the HTF. Such determined thermo-physical parameter(s) related to the HTF denote the thermo-physical property of the HTF at temperatures above 200°C and is further processed to grade/certify the HTF quality/operation at higher temperatures (above 200° C) by awarding a specific rating e.g. A, B, C, etc, or ratings based on scales of 100 or 10.

Further, different formulations/compositions of the developed HTF can be easily evaluated by analyzing the thermodynamic parameters of the correspondingly generated steam as well as the correspondingly determined thermo-physical parameters of the HTF.

Further, the HTF used for the evaluation through the set up 300 may include but is not limited to liquid HTF, vapour/liquid phase HTF, Liquid HTF with additives, HTF with nanoparticles.

*Evaluation of heat exchanger*

Heat transfer co-efficient related to the heat exchanger 304 can also be calculated from the pressure/temperature data at the heat exchanger's 304 inlet and outlet in respect of the HTF and secondary fluid. Accordingly, the test set up 300 is executed and pressure & temperature are measured at the heat exchangers' 304 inlet and outlet of the heat exchanger 304, with respect to both the HTF side and the secondary fluid side. Upon execution of the test set up 300, a temperature difference is obtained at both such sides of the heat exchanger 304, while pressure losses are obtained at the HTF entry side of the heat exchanger 304. A flow rate of HTF and the secondary fluid is measured at both sides of the heat exchanger through flow meters.

Under steady state conditions, heat transferred from the hot fluid to the cold fluid in terms of the mass flow rates and temperatures at the entry and exit of the heat exchanger 304 is thermodynamically represented as:

At oil (hot) side

$$Q_h = m_h C_{ph} \Delta T_h$$

At water (cold) side

$$Q_c = m_c C_{pc} \Delta T_c$$

Overall Heat Transfer Rate

$$Q = UA\Delta T_m = \frac{\Delta T_m}{R_T}$$

*Where,*

*U = Overall heat transfer coefficient*
*A = Heat Exchanger Area (A)*
*$R_T$ = Overall resistance in heat exchanger*
*$\Delta T_m$ = Log Mean Temperature Difference*

$$(LMTD) = \frac{\Delta T_h - \Delta T_c}{\ln \frac{\Delta T_h}{\Delta T_c}}$$

The overall resistances can be calculated based on hot side fluid resistance ($R_{hf}$), wall resistance ($R_w$) and cold side fluid resistance ($R_{cf}$) using:

$$R_T = R_{hf} + R_w + R_{cf}$$

*Where,*

$$R_{hf} = \frac{1}{A_1 h_h}$$

$$R_w = \frac{\ln \frac{D_2}{D_1}}{2\pi L K_w}$$

$$R_{cf} = \frac{1}{A_2 h_c}$$

In above equations $h_h$ and $h_c$ are heat transfer co-efficient at hot side (oil) and cold side (water), which can be found using Nusselt number for oil and water.

*For hot oil side (fluid inner tubes)*

$$h_h = Nu_h \left( \frac{K_h}{D_h} \right)$$

$$Nu_h = 0.023 \, \mathrm{Re}_h^{0..3} \, \mathrm{Pr}_h^{0.3}$$

*For cold side (water)*

$$h_c = Nu_c \left( \frac{K_c}{D_c} \right)$$

$$Nu_c = 0.36 \, \mathrm{Re}_c^{0..55} \, \mathrm{Pr}_c^{0.33}$$

Using the above-mentioned thermodynamic equations, an overall heat transfer rate and a heat transfer co-efficient in respect of the heat exchanger 304 can be calculated. Further, the test set up 300 also includes a provision to substitute one type of heat exchangers with another, which thereby enables the evaluation of different type of heat exchangers while employing the same test set-up 300.

*Stability testing of HTF*

The test set up 300 as disclosed in this invention may also be used for evaluating a cyclic stability of HTF which is a very critical parameter of the HTF especially for the solar applications. Accordingly, thermal cycling tests, which are otherwise restricted to be performed on actual solar power based plants, can be simulated within this test setup 300 and eventually the degradation in performance of the HTF can be measured with time. The present test setup 300 has the provision for sample collection of HTF before after every heat transfer cycle. Periodic samples are collected and analyzed to monitor the cyclic degradation in thermo-chemical properties (heat conductivity, heat capacity, etc,) and material properties (density, viscosity, etc.) of the HTF for thermal stability tests of HTF.

In an example, degradation studies can be done by monitoring change in the performance parameters with time while circulating HTF through the test set up 300 under dynamic temperature-pressure conditions for certain period (for example: 21 days). The HTF samples can be collected through a specific sample collection port before and after any heat transfer cycle and diagnosed for determining the important physical properties like heat capacity, thermal conductivity and viscosity. In addition, thermal conditions inside the test set up 300 can be varied to simulate heating/cooling thermal cycles as happening in actual solar power based thermal plants.

It is envisaged that the present invention proves greatly advantageous through conducting evaluation and testing of heat transfer fluid under dynamic operating conditions, which closely simulate the conditions within an actual solar energy based thermal power plant so as to achieve more realistic results. Such evaluation may be helpful for estimation of the performance of any HTF at a temperature above 200°C and preferably around 400°C. Similarly, the thermal stability of HTF and their compatibility with the a heat exchanger 304 can also be evaluated more realistically rather than relying on lab scale accelerated studies performed on small quantity of samples.

In addition, a cumulative effect of different HTF material properties and different heat exchanger configurations can also be evaluated towards transferability of heat, which eventually will help in a right selection of heat exchanger/configuration for maximizing an output of a particular type of HTF.

Overall, apart from evaluating the HTF as a heat transferor, the test set-up 300 is extendable and scalable for evaluating HTF cyclic stability and compatibility of operation with respect to different heat exchangers and dynamic operating conditions.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment.

**Claims**

1. A method for testing and evaluating heat transfer elements at high temperature operations, the method comprising:

     introducing (step 102) a heat transfer fluid (HTF) and a secondary fluid into at least one heat exchanger;
     measuring (step 104) at least one thermodynamic parameter related to heat transfer between the HTF and the secondary fluid;
     determining (106) at least one thermo-physical parameter of said HTF based on at least one measured thermodynamic parameter related to the secondary fluid;
     grading (108) the heat transfer fluid based on the at least one thermo-physical parameter of said HTF; the method being **characterised in that** it further comprises:

     determining (step 112) at least one stability related parameter for the heat transfer fluid, wherein the at least one stability related parameter indicates at least a rate of degradation in performance of the heat transfer fluid over a pre-determined time period.

2. The method as claimed in claim 1, wherein said at least-one thermo-physical parameter of said HTF is determined based further upon a known thermodynamic parameter of the secondary fluid.

3. The method as claimed in claim 1, wherein the HTF and the secondary fluid are at least one of: a single phase aqueous fluid, a two phase (vapour/liquid) fluid, a gaseous fluid, an aqueous fluid with additives, and an aqueous fluid with suspended particles.

4. The method as claimed in claim 1, wherein at least one measured thermodynamic parameter is based upon at least one of a temperature, density, and a pressure of the secondary fluid at the outlet of the heat exchanger.

5. The method as claimed in claim 1, wherein at least one determined thermo-physical parameter corresponds to a thermo-physical property of the HTF and wherein said property corresponds to one or more of a viscosity, thermal conductivity, density and heat capacity.

6. The method as claimed in claim 1, wherein the measuring comprises measuring the at least one thermodynamic parameter related to said HTF.

7. The method as claimed in claim 1, wherein the introducing comprises providing said HTF and said secondary fluid at a pre-determined temperature, pressure and a flow rate into said at least one heat exchanger.

8. The method as claimed in claim 1, further comprising:

   determining (step 110) a heat transfer coefficient for said at least one heat exchanger; and evaluating performance of said at least one heat exchanger based at least on said heat transfer coefficient.

9. The method as claimed in any of the preceding claims, wherein said heat transfer coefficient is determined based upon at least one of:

   a temperature and pressure difference between an inlet and outlet of said heat exchanger, and at least one measured thermo-dynamic parameter associated with the HTF and/or the secondary fluid.

10. The method as claimed in any of the preceding claims, further comprising:
   displaying (step 114) at least one of: grading of the heat transfer fluid, a performance indicia of the heat exchanger; at least one determined thermo-physical parameter related to the HTF at a temperature of at least about 200° C, and said rate of degradation in performance of the HTF.

11. A system (200) for testing and evaluating heat transfer elements at high temperature operations, the system comprising:

   an introducing means (202) for introducing a heat transfer fluid (HTF) and a secondary fluid; at least one heat exchanger (204) for heat transfer between the HTF and the secondary fluid; a measuring means (206) to measure at least one thermodynamic parameter related to the heat transfer between the HTF and the secondary fluid; a processing means (208) to determine at least one thermo-physical parameter of said HTF based at least upon at least one measured thermodynamic parameter related to the secondary fluid; a grading means (210) to grade the HTF based upon the determined at least one thermo-physical parameter of said heat transfer fluid; **characterised in that** the system further comprises a thermal stability determining means configured for determining at least one stability related parameter for the HTF, wherein the at least one stability related parameter indicates at least a rate of degradation in performance of the heat transfer fluid over a pre-determined time period.

12. The system (200) as claimed in claim 11, wherein the processing means (208) determines said at least one thermo-physical parameter related to said HTF based further upon a known thermodynamic parameter of the secondary fluid.

13. The system (200) as claimed in claim 11, wherein the measuring means (206) measure the at least one thermodynamic parameter related to the secondary fluid based at least upon a temperature, density and pressure of the secondary fluid at the outlet of the heat exchanger.

14. The system (200) as claimed in claim 11, wherein the measuring means (206) measure at least one thermodynamic parameter related to said HTF.

15. The system (200) as claimed in claim 11, wherein the introducing means (202) comprises a heater, pump and flow meter for providing said HTF and said secondary fluid at a pre-determined temperature, pressure and flow rate into said at least one heat exchanger.

16. The system (200) as claimed in claim 11, further comprising:

   a determining means for determining a heat transfer coefficient of at least one heat exchanger; and an evaluating means for evaluating a performance indicator of said at least one heat exchanger.

17. The system (200) as claimed in any of the preceding claims, said determining means determines said heat coefficient based upon at least one of: a temperature and pressure difference between the inlet and outlet of said heat exchanger, and at least one measured thermo-dynamic parameter associated with the HTF and secondary fluid.

18. The system (200) as claimed in any of the preceding claims, further comprising:
   a display for displaying at least one of: grading of the heat transfer fluid, at least one determined thermo-physical parameter related to the HTF at a temperature of at least about 200°C, a performance indicia of the heat exchanger and said rate of degradation in performance of the heat transfer fluid.

**Patentansprüche**

1. Verfahren zum Testen und Bewerten von Wärmeübertragungselementen bei Hochtemperaturvorgängen, wobei das Verfahren folgende Schritte aufweist:

Einführen (Schritt 102) von Wärmeträgerflüssigkeit (WTF) und Sekundärflüssigkeit in mindestens einen Wärmetauscher;
Messen (Schritt 104) mindestens eines thermodynamischen Parameters, der sich auf die Wärmeübertragung zwischen der WTF und der Sekundärflüssigkeit bezieht;
Bestimmen (106) mindestens eines thermophysikalischen Parameters der genannten WTF auf der Grundlage von mindestens einem gemessenen thermodynamischen Parameter, der sich auf die Sekundärflüssigkeit bezieht;
Einstufung (108) der Wärmeträgerflüssigkeit auf der Grundlage von mindestens einem thermophysikalischen Parameter der genannten WTF; wobei das Verfahren **dadurch gekennzeichnet ist, dass** es ferner aufweist:
Bestimmen (Schritt 112) mindestens eines stabilitätsbezogenen Parameters für die Wärmeträgerflüssigkeit, wobei mindestens ein stabilitätsbezogener Parameter mindestens eine Rate der Leistungsminderung der Wärmeträgerflüssigkeit über einen vorbestimmten Zeitraum anzeigt.

2. Verfahren nach Anspruch 1, wobei mindestens ein genannter thermophysikalischer Parameter der genannten WTF weiterhin auf der Grundlage von einem bekannten thermodynamischen Parameter der Sekundärflüssigkeit weiter bestimmt wird.

3. Verfahren nach Anspruch 1, wobei die WTF und die Sekundärflüssigkeit mindestens eine der folgenden sind: einphasige wässriges Flüssigkeit, zweiphasige (Dampf/Flüssigkeit) Flüssigkeit, gasförmige Flüssigkeit, wässrige Flüssigkeit mit Additiven und wässrige Flüssigkeit mit suspendierten Partikeln.

4. Verfahren nach Anspruch 1, wobei mindestens ein gemessener thermodynamischer Parameter sich auf mindestens einen Parameter der Temperatur, Dichte und des Drucks der Sekundärflüssigkeit am Ausgang des Wärmetauschers beruht.

5. Verfahren nach Anspruch 1, wobei mindestens ein bestimmter thermophysikalischer Parameter einer thermophysikalischen Eigenschaft der WTF entspricht und wobei die Eigenschaft einem oder mehreren Parametern der Viskosität, Wärmeleitfähigkeit, Dichte und Wärmekapazität entspricht.

6. Verfahren nach Anspruch 1, wobei das Messen Messen mindestens eines thermodynamischen Parameters, der sich auf die genannte WTF bezieht, aufweist.

7. Verfahren nach Anspruch 1, wobei das Einleiten das Bereitstellen der genannten WTF und der genannten Sekundärflüssigkeit bei einer vorbestimmten Temperatur, einem vorbestimmten Druck und einer vorbestimmten Durchflussrate in mindestens einen genannten Wärmetauscher aufweist.

8. Verfahren nach Anspruch 1, das ferner aufweist:
Bestimmen (Schritt 110) des Wärmeübergangskoeffizienten für mindestens einen genannten Wärmetauscher; und Bewerten der Leistung mindestens eines genannten Wärmetauschers auf der Grundlage mindestens des genannten Wärmeübergangskoeffizienten.

9. Verfahren nach einem der vorhergehenden Ansprüche, wobei der genannte Wärmeübergangskoeffizient auf der Grundlage von mindestens einem der folgenden Elemente bestimmt wird:
Temperatur- und Druckdifferenz zwischen dem Eingang und Ausgang des genannten Wärmetauschers, und mindestens einem gemessenen thermodynamischen Parameter, der sich auf die WTF und/oder die Sekundärflüssigkeit bezieht.

10. Verfahren nach einem der vorhergehenden Ansprüche, das ferner aufweist:
Anzeigen (Schritt 114) von mindestens einem der folgenden Elemente: Einstufung der Wärmeträgerflüssigkeit, Leistungsindikatoren des Wärmetauschers; mindestens ein bestimmter thermophysikalischer Parameter, der sich auf die WTF bei einer Temperatur von mindestens etwa 200°C bezieht, und die Raten der Leistungsminderung der WTF.

11. System (200) zum Testen und Bewerten von Wärmeübertragungselementen bei Hochtemperaturvorgängen, wobei das System aufweist:

Einleitungsmittel (202) zum Einleiten von Wärmeträgerflüssigkeit (WTF) und Sekundärflüssigkeit;
mindestens einen Wärmetauscher (204) zur Wärmeübertragung zwischen der WTF und der Sekundärflüssigkeit;
Messmittel (206) zum Messen mindestens eines thermodynamischen Parameters, der sich auf die Wärmeübertragung zwischen der WTF und der Sekundärflüssigkeit bezieht;
Verarbeitungsmittel (208) zur Bestimmung mindestens eines thermophysikalischen Parameters der genannten WTF auf der Grundlage von mindestens einem gemessenen thermodynamischen Parameter, der sich auf die Sekundärflüssigkeit bezieht;
Einstufungsmittel (210) zum Einstufen der WTF auf der Grundlage von mindestens einem bestimmten thermophysikalischen Parameter der genannten Wärmeträgerflüssigkeit; **dadurch gekennzeichnet, dass** das System ferner aufweist:

Mittel zur Bestimmung der thermischen Stabilität, das so konfiguriert ist, dass es mindestens einen stabilitätsbezogenen Parameter für die WTF bestimmt, wobei mindestens ein stabilitätsbezogene Parameter mindestens eine Rate der Leistungsminderung der Wärmeträgerflüssigkeit über einen vorbestimmte Zeitraum anzeigt.

12. System (200) nach Anspruch 11, wobei das Verarbeitungsmittel (208) mindestens einen genannten thermophysikalischen Parameter, der sich auf WTF bezieht, ferner auf der Grundlage von bekannten thermodynamischen Parametern der Sekundärflüssigkeit bestimmt.

13. System (200) nach Anspruch 11, wobei die Messmittel (206) mindestens einen thermodynamischen Parameter, der sich auf die Sekundärflüssigkeit bezieht, auf der Grundlage von mindestens einem Parameter der Temperatur, Dichte und des Drucks der Sekundärflüssigkeit am Ausgang des Wärmetauschers messen.

14. System (200) nach Anspruch 11, wobei die Messmittel (206) mindestens einen thermodynamischen Parameter messen, der sich auf die WTF bezieht.

15. System (200) nach Anspruch 11, wobei das Einleitungsmittel (202) einen Heizer, eine Pumpe und einen Durchflussmesser umfasst, um die WTF und die genannte Sekundärflüssigkeit mit einer vorbestimmten Temperatur, einem vorbestimmten Druck und einer vorbestimmten Durchflussmenge in den mindestens einen genannten Wärmetauscher zu leiten.

16. Das System (200) nach Anspruch 11, das ferner aufweist:

Bestimmungsmittel zum Bestimmen des Wärmeübergangskoeffizienten mindestens eines Wärmetauschers; und
Bewertungsmittel zum Bewerten eines Leistungsindikators mindestens eines genannten Wärmetauschers.

17. System (200) nach einem der vorhergehenden Ansprüche, wobei das genannte Bestimmunmittel den genannten Wärmekoeffizienten auf der Grundlage von mindestens einem der folgenden Parameter bestimmt: eine Temperatur- und Druckdifferenz zwischen dem Eingang und dem Ausgang des genannten Wärmetauschers und mindestens ein gemessener thermodynamischer Parameter, der mit der WTF und der Sekundärflüssigkeit verbunden ist.

18. System (200) nach einem der vorhergehenden Ansprüche, das ferner umfasst:
Anzeige zum Anzeigen von mindestens einem der folgenden Elemente: Einstufen der Wärmeträgerflüssigkeit, mindestens ein bestimmter thermophysikalischer Parameter, der sich auf die WTF bei einer Temperatur von mindestens etwa 200°C bezieht, Leistungsindikatoren des Wärmetauschers und der genannten Rate der Leistungsminderung der Wärmeträgerflüssigkeit.

## Revendications

1. Procédé permettant de tester et d'évaluer des éléments de transfert de chaleur lors d'opérations en fonctionnement à haute température, ledit procédé comprenant les étapes suivantes :

l'introduction (étape 102) d'un fluide de transfert de chaleur (FTC) et d'un fluide secondaire dans au moins un échangeur de chaleur;
la mesure (étape 104) d'au moins un paramètre thermodynamique lié au transfert de chaleur entre le FTC et le fluide secondaire ;
la détermination (106) d'au moins un paramètre thermophysique dudit FTC sur la base d'au moins un paramètre thermodynamique mesuré lié au fluide secondaire ;
le classement (108) du fluide de transfert de chaleur sur la base d'au moins un paramètre thermophysique dudit FTC ; le procédé étant **caractérisé en ce qu'**il comprend en outre les étapes suivantes :
la détermination (étape 112) d'au moins un paramètre lié à la stabilité pour le fluide de transfert de chaleur, dans lequel au moins un paramètre lié à la stabilité indique au moins un taux de dégradation des performances du fluide de transfert de chaleur sur une période prédéterminée.

2. Procédé selon la revendication 1, dans lequel ledit au moins un paramètre thermophysique dudit FTC est déterminé en se basant en outre sur un paramètre thermodynamique connu du fluide secondaire.

3. Procédé selon la revendication 1, dans lequel le FTC et le fluide secondaire sont au moins l'un d'un fluide aqueux à phase unique, d'un fluide à deux phases (vapeur/liquide), d'un fluide gazeux, d'un fluide aqueux avec des additifs et d'un fluide aqueux avec des particules en suspension.

4. Procédé selon la revendication 1, dans lequel au moins un paramètre thermodynamique mesuré est basé sur au moins un paramètre d'une température, d'une densité et d'une pression du fluide secondaire à la sortie de l'échangeur de chaleur.

5. Procédé selon la revendication 1, dans lequel au moins un paramètre thermophysique déterminé correspond à une propriété thermophysique du FTC et dans lequel ladite propriété correspond à un ou plusieurs paramètres d'une viscosité, d'une conductivité thermique, d'une densité et d'une capacité thermique.

6. Procédé selon la revendication 1, dans lequel la mesure comprend la mesure d'au moins un paramètre thermodynamique lié audit FTC.

7. Procédé selon la revendication 1, dans lequel l'introduction comprend la fourniture dudit FTC et dudit fluide secondaire à une température, une pression et un débit prédéterminés dans ledit au moins un échangeur de chaleur.

8. Procédé selon la revendication 1, comprenant en outre :
   la détermination (étape 110) d'un coefficient de transfert de chaleur pour ledit au moins un échangeur de chaleur ; et l'évaluation des performances dudit au moins un échangeur de chaleur en se basant au moins sur ledit coefficient de transfert de chaleur.

9. Procédé selon l'une quelconque des revendications précédentes, dans lequel ledit coefficient de transfert de chaleur est déterminé sur la base :

   d'au moins un paramètre d'une différence de température et de pression entre une entrée et une sortie dudit échangeur de chaleur, et d'au moins un paramètre thermodynamique mesuré associé au FTC et/ou au fluide secondaire.

10. Procédé selon l'une quelconque des revendications précédentes, comprenant en outre :
    l'affichage (114) d'au moins un paramètre de classement du fluide de transfert de chaleur, un indice de performance de l'échangeur de chaleur ; au moins un paramètre thermophysique déterminé associé au FTC à une température d'au moins environ 200°C, et ladite vitesse de dégradation des performances du FTC.

11. Système (200) permettant de tester et d'évaluer des éléments de transfert de chaleur lors d'opérations en fonctionnement à haute température, le système comprenant les étapes suivantes :

    un moyen d'introduction (202) pour introduire un fluide de transfert de chaleur (FTC) et un fluide secondaire ;
    au moins un échangeur de chaleur (204) pour transférer la chaleur entre le FTC et le fluide secondaire ;

un moyen de mesure (206) pour mesurer au moins un paramètre thermodynamique lié au transfert de chaleur entre le FTC et le fluide secondaire ;
un moyen de traitement (208) pour déterminer au moins un paramètre thermophysique dudit FTC sur la base d'au moins un paramètre thermodynamique mesuré lié au fluide secondaire ;
un moyen de classement (210) pour classer le FTC sur la base d'au moins un paramètre thermophysique déterminé dudit fluide de transfert de chaleur ; **caractérisé en ce que** le système comprend en outre
un moyen de détermination de la stabilité thermique configuré pour déterminer au moins un paramètre lié à la stabilité pour le FTC, dans lequel au moins un paramètre lié à la stabilité indique au moins un taux de dégradation des performances du fluide de transfert de chaleur sur une période prédéterminée.

12. Système (200) selon la revendication 11, dans lequel le moyen de traitement (208) détermine ledit au moins un paramètre thermophysique lié audit FTC en se basant en outre sur un paramètre thermodynamique connu du fluide secondaire.

13. Système (200) selon la revendication 11, dans lequel le moyen de mesure (206) mesure au moins un paramètre thermodynamique lié au fluide secondaire en se basant au moins sur une température, une densité et une pression du fluide secondaire à la sortie de l'échangeur de chaleur.

14. Système (200) selon la revendication 11, dans lequel le moyen de mesure (206) mesure au moins un paramètre thermodynamique lié audit FTC.

15. Système (200) selon la revendication 11, dans lequel le moyen d'introduction (202) comprend un dispositif de chauffage, une pompe et un débitmètre pour fournir ledit FTC et ledit fluide secondaire à une température, une pression et un débit prédéterminés dans ledit au moins un échangeur de chaleur.

16. Système (200) selon la revendication 11, comprenant en outre :

    un moyen de détermination pour déterminer un coefficient de transfert de chaleur d'au moins un échangeur de chaleur ; et
    un moyen d'évaluation pour évaluer un indicateur de performance dudit au moins un échangeur de chaleur.

17. Système (200) selon l'une quelconque des revendications précédentes, ledit moyen de détermination détermine ledit coefficient thermique sur la base d'au moins un paramètre d'une différence de température et de pression entre une entrée et une sortie dudit échangeur de chaleur, et d'au moins un paramètre thermodynamique mesuré associé au FTC et au fluide secondaire.

18. Le système (200) selon l'une quelconque des revendications précédentes, comprenant en outre :
un afficheur pour afficher au moins un paramètre de classement du fluide de transfert de chaleur, au moins un paramètre thermophysique déterminé lié au FTC à une température d'au moins environ 200°C, un indice de performance de l'échangeur de chaleur et ladite vitesse de dégradation des performances du fluide de transfert de chaleur.

Introducing an HTF and a secondary fluid /102

Measuring at least one thermodynamic parameter related to heat transfer between the HTF and the secondary fluid /104

Determining at least one thermo-physical parameter of said HTF based on the measured thermodynamic parameter related to the secondary fluid /106

Grading the heat transfer fluid based on the determined at least one thermo-physical parameter /108

determining a heat transfer coefficient for said heat exchanger and evaluating performance thereof /110

determining at least one stability related parameter for the heat transfer fluid /112

displaying grading of the heat transfer fluid and the heat exchanger, a thermo-physical parameter and a rate of degradation related to the HTF /114

**Figure 1**

System <u>200</u>

Introducing Means <u>202</u>

Heat exchanger <u>204</u>

Measuring means <u>206</u>

Determining Means <u>208</u>

Grading Means <u>210</u>

**Figure 2**

**Figure 3**

EP 2 889 354 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2009154520 A1